# EUROPEAN PATENT APPLICATION

(11) **EP 3 893 227 A1**
(43) Date of publication of application: **13.10.2021**
(21) Application number: 21460003.3
(22) Date of filing: 07.01.2021
(51) Int. Cl.: G09B 21/00

(54) **DEVICE FOR CREATING SPATIAL VISUALISATIONS OF PICTURES AND GRAPHS FOR THE PURPOSE OF EDUCATION AND VISUALLY IMPAIRED PEOPLE**

(30) Priority: 12.02.2020 PL 43288820
(71) Applicant: Politechnika Slaska, 44-100 Gliwice (PL)
(72) Inventor: Dobrowolska, Malgorzata, 40-540 Katowice (PL); Salom, Miguel Angel, Salta-Argentina (AR); Arcienga Morales, Antonio Adrian, Salta-Argentina (AR); Gzik, Marek, 44-100 Gliwice (PL); Wojarski, Piotr, 43-190 Mikolów (PL); Nawrat, Aleksander Michal, 41-807 Zabrze (PL); Chrupala, Aleksandra, 44-100 Gliwice (PL); Bedkowska-Oblak, Marzena, 41-200 Sosnowiec (PL)

(57) **Abstract**

A device for creating spatial visualisations of pictures and graphs for the purpose of education and visually impaired people, characterised by the fact that it consists of the base (1) and the chassis (2) which is attached to it, the runners (3) on which the controller (4) is fixed are attached to the chassis (2), the mobile controller (4) is equipped with the blocks (5) which are pulled forward towards the upper section of the device, the resisting element (6) which maintains the mobile blocks (7) is attached to the chassis (2), in the upper section of the blocks (7) there is the elastic membrane (8), the knobs (10) which have the element showing the current position (11) are joined to the base of the device (1), the convex indications (9) which describe the settings of the knobs (10) are placed around the knobs (10), in the base of the device (1) there is the scanner (12) and the printer (13), the display for controlling (14) and the memory card slot (15).

## Description

The present invention relates to a device for creating spatial visualisations of pictures and graphs for the purpose of education and visually impaired people.

The basis of inclusive education is a social model of perceiving disability which assumes that society is obliged to reduce effects of any disability resulting from existing social, economic, legal or organisational barriers. In relation to eduaction it means a call for removing any barriers, including technical ones, which prevent or hinder functioning of students with special educational needs at school. In the current education system students who are blind or partly sighted follow the same syllabuses as their non-disabled peers. However, a syllabus is tailored for the needs of a particular disabled student with respect to the content, organisation of teaching, educational requirements as well as work forms and methods. The pace and dynamics of development processes of blind children depend significantly on the suport which is given to them. Effectiveness of education in the scope of acquiring syllabus content is related, among others, to proper instrumentation of a student and to availability of teaching aids.

One of the basic teaching aids indispensable in the proccess of shaping and developing spatial imagination of the blind is convex graphics (typhlographics). The key condition of typhlographics being useful is proper graphic education of students which comprises teaching them to read and further to create convex pictures. At school teachers use ready typhlographic pieces published by specialised publishers e.g. within citizens' initiatives ( as on this website: http://www.rysunki.pzn.org.pl/ 29.03.2019 ) or convex pictures made by teachers themselves, either home-made ( most frequently with heatactivated glue or intumescent coating) or with the use of available devices for producing convex graphics (e.g. Braille machines and printers, tactile image makers - e.g. Tectile Image Maker Piaf by Harpo:
http://www.harpo.com.pl/sklep/sprzet-dla-niewidomych-i-slabowidzacych/inne-urzadzenia-i-materialy/piaf-tactile/ 29.03.2019). In classrooms there are no devices enabling fast, repetitive, flexible (in reference to various contents), and modifiable spatial visualisations of pictures and graphs prepared on the basis of materials developed by a teacher or made by a student him/herself. The most frequently encountered accessories for practising making convex pictures consisit of the soft pad and foil sheets placed on it (an example is the pad Draftsman Standard: http://www.phuimpuls.pl/.?tyflografika,73, 29.03.2019). Due to the pressure of a pen or another sharp-ended device lines which are drawn on the foil become convex and tactile. The pads of this type can be additionally equipped with a frame and a ruler with the Braille designation which can be moved on special runners, which enables drawing straight horizontal and vertical lines. However, there are no devices which enable partially sighted people to draw lines which are diagonal and irregular or regular with more complex patterns, such as wavy lines or similar ones. The proposed solution enables creating spatial visualisation of pictures on the basis of previously created flat presentations. Another technical advantage of the device is a possibility to visualise graphs on the basis of an adequate mathematical formulae which are entered.

The present invention relates to a device for creating spatial visualisations of pictures and graphs for the purpose of education and visually impaired people or in other applications, such as topographies, systems, modelling or any other activities requiring spatial visualisations. The device consists of a scanner which enables reading flat graphics and there is a transfer to the module equipped with mobile blocks. This module pulls forward adequate blocks towards the elastic membrane in such a manner that each pixel of the picture which is being read corresponds to one mobile block. The elastic membrane in the upper section of the blocks gives the impression of the tactile continuity of a created picture. A person who is blind or partly sighted has a possibility to touch the upper part of the membrane and he/she has the impression of touching a convex picture. The device has also a possibility to set the paramteres of the picture and to support learning mathematical functions. With the use of the knobs in the front section of the device it is possibile to set the values of function coefficients and at the same time to change the level and the position of the blocks which are pulled forward, which results in the change of convexity of the drawn picture. The picture which is set and modified with the use of the knobs can be printed as a flat picture on the printer which is built in inside the device. The picture which is created this way after being scanned allows to restore the spatial figure which has been created.

A similar solution has been used, among others, in the device DISPOSITIVO MECÁNICO DE REPRESENTACION HAPTICA-3D (ES1194610U), where convex inscriptions are created by pulling up
densely arranged blocks. In this device they have also used resisting elements and the configuration which enebles creating inscriptions in Braille. Similar descriptions of symbols in Braille have been used in the invention DISPOSITIVO MECÁNICO DE REPRESENTACION HAPTICA-3D CON MEDIOS ELÁSTICOS DE RETENCION (ES1195 059U). In this invention the description is being created by pulling forward the blocks which are in the shape of cubes. A slightly different shape of blocks has been used in the device for learning mathematical equations: DISPOSITIVO MECANICO DE REPRESENTACION HAPTICA CON DISPLAYS DE SEGMENTOS RESALTABLES (ES1203462U). On the steady matrix there are buillt-in blocks diodes which can additionally be lit up. However, all the devices mentioned above do not have mobile retractable segments which control the movement of blocks, they do not have a membrane on the outer section and they do not have modules which ensure functionality of reading and writing the information which is being proccessed. In the device TACTILE COMMUNICATION SYSTEM (GB2311888A) they have used a membrane with integrated elements which are pulled forward and they imitate the change in the surface grades. However, a completely different method of element movement has been used.

There are no devices which ensure an automatic change of the the shape of the membrane which is stretched in accordance with the movement of blocks ensuring the possibility of reading, writing and printing the information which is being proccessed. All the devices of similar functinality present on the market rely on the movement of blocks which are held on resisting elements. The systems are not operated, they most frequently constitute mechanical assemblies which are connected in a particular way. The proposed solution for creating spatial visualisations of pictures and graphs for the purpose of education and visually impaired people is universal and innovative in reference to both its structure and functionality.

The device allows to minimalise the costs of purchasing accessories for creating convex pictures and ready typhlograpic pieces which are characterised by increased material wearing due to intensive usage. It is also significant that one does not have to store convex pictures in a proper way and at the same time the possibility of getting the prints is maintained. Another precious asset of the proposed solution is the possibility to adjust a spatial picture to any particular task (which is not possibile in case of ready pieces of typhlographics), which in consequence increases a student's class work efficiency. The fact that a spatial visualisation appears at a student's workplace automatically optimises a teacher and student's work during a lesson, which allows to multiply and diversify the materials experienced by a student. The method of creating a visualisation enabling phased reading of more complex pictures or schemes (e.g. the structure of a cell) should also have a positive impact on the learning/teaching effects and on realisation of the tasks which require spatial visualisations.

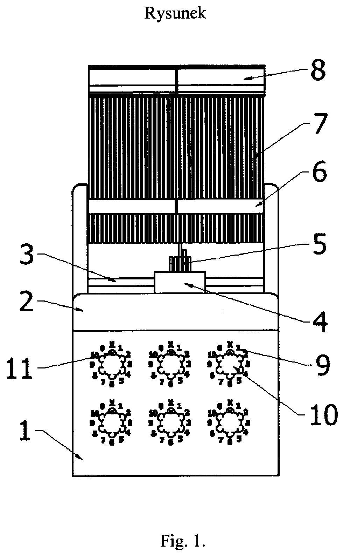

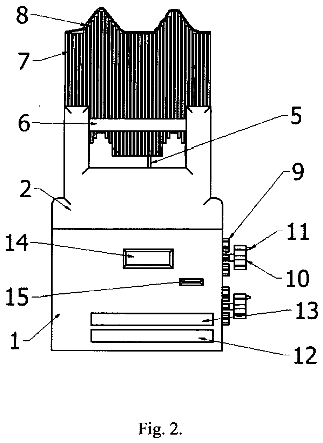

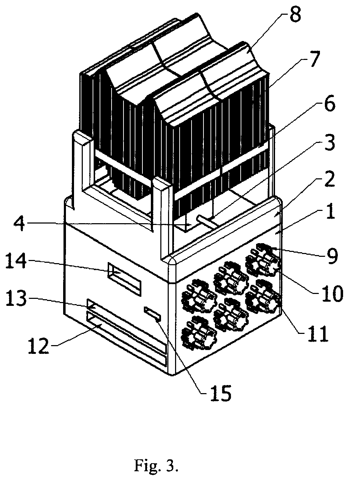

The invention is presented in the example of realisation in the drawing , in which fig. 1 shows the view of the device from the front, fig.2 shows the view of the device from the side, and fig.3 shows the axonometric view.

The proposed solution according to the drawings 1,2 and 3 consists of the base 1 and the chassis 2 which is attached to it. The runners 3 which maintain the mobile controller 4 are joined to the chassis 2. The mobile controller 4 has the blocks 5 which can be pulled forward towards the upper section of the device. The resisting element 6 which maintains the mobile blocks 7 is joined to the chassis 2. The blocks 7 are being pushed by the blocks 5 which are pulled forward from the controller. There is the elastic membrane 8 in the upper section of the blocks 7. The elastic membrane 8 is distorted as a result of the blocks 7 being pulled forward. The knobs 10 which have the element showing the current position 11 are joined to the base of the device 1. The convex indications 9 which describe the settings of the knobs 10 are placed around the knobs 10. In the base of the device 1 there is the scanner 12, the printer 13, the display 14 and the memory card slot 15.

Functioning of the device comprises two modes: the mode of creating a convex picture on the basis of a scanned picture and the mode of creating convex graphics presenting mathematical functions on the basis of the setting of the knobs in the device. The mode of the device functioning is changed with the use of the settings on the touch control panel of the display 14 placed in the base 1.

In the mode of creating a convex picture on the basis of a scanned picture the first step is to read the data from the medium of information, which is done by scanning a picture placed on the feeder of the scanner 12 or by reading the data from the memory card inserted in the reader 15. In the next step the resisting element 6 causes the blocks 7 to be evenly aligned and it sets a proper tension of the membrane 8. Next, the mobile controller 4 starts to move along the runners 3. The mobile controller 4 stops in selected places and it pulls forward the blocks 5 which push upwards the blocks 7. The blocks 7 are being held in their position thanks to the usage of the resisting element 6. Pulling forward the blocks 7 causes the distortion of the membrane 8 in such a way that a person touching the membrane from the upper side has the impression that a convex picture has been created.

In the mode of creating convex graphics presenting mathematical functions on the basis of the setting of the knobs in the device in the first step the blocks 7 are evenly positioned by the resisting element 6. In the next step the resisting element 6 sets a proper tension of the membrane 8. Next, on the basis of the settings of the knobs 10 it is possible to set the values of the coefficients of the mathematical function which is being drawn. The values which can be set have been written down with the use of the convex indications 9 ( Arabic numerals, Roman numerals or Braille inscription). The convex element 11 shows the setting of the knob 10. The approval of the set value is done by clicking in the element 11. After setting all the values the mobile controller 4 starts to move along the runners 3. The mobile controller 4 stops in selected places and it pulls forward the blocks 5 which push upwards the blocks 7. The blocks 7 are being held in their position thanks to the usage of the resisting element 6. Pulling forward the blocks 7 causes the distortion of the membrane 8 in such a way that a person who touches the membrane has the impression that he/she touches a convex picture presenting the mathematical function which is set in the device. The printer 13 enables printing out the flat picture of the set mathematical function. After scanning with the scan 12 the device will make it possible to restore the function previously set.

## Claims

1. A device for creating spatial visualisations of pictures and graphs for the purpose of education and visually impaired people, **characterised by** the fact that it consists of the base (1) and the chassis (2) which is attached to it, the runners (3) on which the controller (4) is fixed are attached to the chassis (2), the mobile controller (4) is equipped with the blocks (5) which are pulled forward towards the upper section of the device, the resisting element (6) which maintains the mobile blocks (7) is attached to the chassis (2), in the upper section of the blocks (7) there is the elastic membrane (8), the knobs (10) which have the element showing the current position (11) are joined to the base of the device (1), the convex indications (9) which describe the settings of the knobs (10) are placed around the knobs (10), in the base of the device (1) there is the scanner (12) and the printer (13), the display for controlling (14) and the memory card slot (15).

2. The device of claim 1 **characterised by** the fact that the runners (3) have the threaded structure to which the mobile controller (4) is attached by screwing to the runner (3).

3. The device of claim 1 **characterised by** the fact that the mobile controller (4) has at least nine blocks (5) which are pulled forward.

4. The device of claim 1 **characterised by** the fact that the mobile controller (4) moves on the runners (3) in two axes

5. The device of claim 1 **characterised by** the fact that the resisting element (6) is made of the rubber material which enables moving the blocks (7) upwards exclusively

6. The device of claim 1 **characterised by** the fact that the blocks (5) which can be pulled forward are in the shape of a regular prism with a square base

7. The device of claim 1 **characterised by** the fact that the mobile blocks (7) are in the shape of a regular prism with a square base

8. The device of claim 1 **characterised by** the fact that the elastic membrane (8) is deformable in the range of the mobility of the blocks (7)

9. The device of claim 1 **characterised by** the fact that the elastic membrane (8) is covered with the elastic coat preventing scratching as a result of touch

10. The device of claim 1 **characterised by** the fact that the tension of the elastic membrane (8) is set by the resisting element (6)

11. The device of claim 1 **characterised by** the fact that the knobs (10) have the element which shows the current position (11) which is equipped with a button

12. The device of claim 1 **characterised by** the fact that the knobs (10) have the range of revolution which equals 30 degrees

13. The device of claim 1 **characterised by** the fact that the indications (9) placed on the base (1) are written down with the use of Arabic numerals, Roman numerals or Braille inscription

14. The device of claim 1 **characterised by** the fact that the indications (9) are placed around the knobs (10) describing twelve positions which can be set

15. The device of claim 1 **characterised by** the fact that the base (1) has the built-in printer (13)

16. The device of claim 1 **characterised by** the fact that the base (1) has the built-in scanner (12)

17. The device of claim 1 **characterised by** the fact that the base (1) has the built-in lithium-ion battery

18. The device of claim 1 **characterised by** the fact that the base (1) has the built-in USB connector

19. The device of claim 1 **characterised by** the fact that the base (1) has the built-in memory card reader

20. The device of claim 1 **characterised by** the fact that the base (1) has the built-in display with the touch operated panel

21. The device of claim 1 **characterised by** the fact that it ensures flexible spatial visualisations according to various content or bas-relief
